# NEUE EUROPÄISCHE PATENTSCHRIFT

(11) **EP 1 110 799 B2**
(45) Veröffentlichungstag und Bekanntmachung des Hinweises auf die Entscheidung über den Einspruch: **27.02.2019**
(45) Hinweis auf die Patenterteilung: 07.02.2007
(21) Anmeldenummer: 00126849.9
(22) Anmeldetag: 07.12.2000
(51) Int. Cl.: B60L 11/12

(54) **Antriebsaggregat**
Drive unit
Ensemble d'entraînement

(30) Priorität: 21.12.1999 DE 19961807
(43) Veröffentlichungstag der Anmeldung: 27.06.2001
(73) Patentinhaber: Siemens Mobility GmbH, 81739 München (DE)
(72) Erfinder: Bingart, Peter, Dipl.-Ing. (FH), 91126 Schwabach (DE); Ropers, Diedrich, Dipl.-Ing., 91083 Baiersdorf (DE)

(56) Entgegenhaltungen:
- EP-A- 0 543 390
- DE-A1- 19 523 985
- US-A- 5 552 681
- PATENT ABSTRACTS OF JAPAN vol. 1996, no. 07, 31. Juli 1996 (1996-07-31) & JP 08 079908 A (MEIDENSHA CORP), 22. März 1996 (1996-03-22)
- PATENT ABSTRACTS OF JAPAN vol. 012, no. 061 (M-671), 24. Februar 1988 (1988-02-24) & JP 62 207105 A (HITACHI LTD), 11. September 1987 (1987-09-11)
- MAEKAWA K ET AL: "Diesel-electric hybrid engine drives with a new PWM control for induction machines" POWER ELECTRONICS AND DRIVE SYSTEMS, 1995., PROCEEDINGS OF 1995 INTERNATIONAL CONFERENCE ON SINGAPORE 21-24 FEB. 1995, NEW YORK, NY, USA,IEEE, 21. Februar 1995 (1995-02-21), Seiten 802-807, XP010140656 ISBN: 0-7803-2423-4
- PATENT ABSTRACTS OF JAPAN vol. 1996, no. 09, 30. September 1996 (1996-09-30) & JP 08 126118 A (HINO MOTORS LTD;TOSHIBA CORP), 17. Mai 1996 (1996-05-17)

## Beschreibung

Die Erfindung betrifft ein Antriebsaggregat mit den Merkmalen des Oberbegriffs des Anspruchs 1.

Aus der JP 08-079908 ist ein Antriebsaggregat bekannt, bei dem mit einer Verbrennungskraftmaschine eine Asynchronmaschine angetrieben wird, die einen Fahrmotor speist. Wenn die Verbrennungskraftmaschine nicht arbeitet, wird der Fahrmotor von einer Batterie gespeist.

Aus der US 5 552 681 ist eine Einspeiseeinrichtung bekannt, die es ermöglicht, eine Asynchronmaschine in einem solchen Antriebsaggregat zu starten. Die dazu benötigte Energie ist in einem Kondensator gespeichert. Mit Hilfe der Asynchronmaschine kann dann die Verbrennungskraftmaschine gestartet werden.

Bei einem bekannten Antriebsaggregat dient also eine Synchronmaschine als Generator, der von einer Verbrennungskraftmaschine angetrieben wird. Die Synchronmaschine ist über einen Gleichrichter mit einem Gleichspannungszwischenkreis gekoppelt, der die elektrische Antriebsenergie für wenigstens einen elektrischen Fahrmotor zur Verfügung stellt. Zum Starten benötigt der Synchrongenerator ein Erregergerät, das ein Magnetfeld im Rotor bzw. im Stator erzeugt. Die bekannten Antriebsaggregate sind relativ groß und relativ schwer. Der Einsatz derartiger Antriebsaggregate erfordert deshalb einen entsprechenden Bauraum, der bei Schienenfahrzeugen nur eingeschränkt zur Verfügung steht und den verbleibenden Nutzraum einschränkt.

Aufgabe der vorliegenden Erfindung ist es deshalb, ein Antriebsaggregat zu schaffen, das gegenüber den bisher bekannten Antriebsaggregaten ein geringeres Gewicht und ein geringeres Volumen aufweist.

Die Aufgabe wird erfindungsgemäß durch die Merkmale im Patentanspruch 1 gelöst.

Damit wird der Vorteil erzielt, dass zu einem geeigneten Zeitpunkt, wenn durch das Bremsen des Fahrzeuges elektrische Energie zur Verfügung steht, die Asynchronmaschine als Motor arbeiten kann, um die Verbrennungskraftmaschine zu starten, falls sie ausgeschaltet war. Vorteilhaft wird also eine Einspeiseeinrichtung entlastet. Das Antriebsaggregat nach der Erfindung hat vorteilhaft ein geringeres Gewicht und ein geringeres Volumen gegenüber bekannten Antriebsaggregaten. Bei Schienenfahrzeugen, die mit dem erfindungsgemäßen Antriebsaggregat ausgerüstet sind, steht damit mehr Nutzraum zur Verfügung.

Bei dem Antriebsaggregat nach der Erfindung wird die für den Antrieb und die Versorgung weiterer Verbraucher benötigte elektrische Energie von wenigstens einer Asynchronmaschine erzeugt, die von wenigstens einer Verbrennungskraftmaschine angetrieben wird. Das für den Einsatz der Asynchronmaschine benötigte Drehstromnetz (Drehfeld) wird über einen eingangsseitigen Wechselrichter vorgegeben. Damit kann die Asynchronmaschine sowohl als Motor als auch als Generator betrieben werden. Der von der Asynchronmaschine erzeugte Drehstrom wird im eingangsseitigen Wechselrichter gleichgerichtet und anschließend in einen Zwischenkreis eingespeist, der als Gleichspannungszwischenkreis oder als Gleichstromzwischenkreis ausgebildet sein kann. Vom Zwischenkreis aus werden die vorgenannten Verbraucher gespeist. Bei dem Verbraucher kann es sich z. B. um einen Drehstrom-Asynchron-Fahrmotor handeln. Dem Zwischenkreis ist dann wenigstens ein ausgangsseitiger Wechselrichter nachgeschaltet, der den für den Fahrmotor benötigten Drehstrom liefert. Bei dem Verbraucher kann es sich aber auch um einen Gleichstrom-Fahrmotor handeln. Die bei bestimmten Anwendungsfällen für das Hochfahren der Asynchronmaschine erforderliche Fremderregung erfolgt in vorteilhafter Weise über eine Einspeiseeinrichtung. Die Einspeiseeinrichtung lädt den Zwischenkreis aus einer Batterie auf und erzeugt über den eingangsseitigen Wechselrichter das Drehstromnetz für den Betrieb der Asynchronmaschine.

Mit einer entsprechend stark ausgelegten Einspeiseeinrichtung wird die Verbrennungskraftmaschine mit Hilfe der in den motorischen Betrieb umgesteuerten Asynchronmaschine gestartet. Ein separater Anlasser kann dann entfallen.

Die Asynchronmaschine wird in den motorischen Betrieb umgesteuert, um dann in einem zulässigen Umfang an die Verbrennungskraftmaschine oder an eine zusätzliche mit der Asynchronmaschine gekuppelte Scheibenbremse Bremsenergie abzugeben. Da über die Asynchronmaschine angefahren werden kann, ist es möglich, die Verbrennungsmaschine bei Gefällstrecken abzuschalten oder von der Asynchronmaschine angetrieben, ohne Brennstoffzufuhr mitlaufen zu lassen.

Gemäß einer weiteren vorteilhaften Ausgestaltung kann der eingangsseitige Wechselrichter für eine von der Asynchronmaschine entkoppelte Stromversorgung (z. B. über Fahrdraht oder dritte Schiene) umgruppiert werden. Bei einer Wechselstromeinspeisung werden die Elemente des Wechselrichters als Vierquadrantensteller und bei einer Gleichstromeinspeisung als Zweiquadrantensteller umgruppiert.

Nachfolgend werden Ausführungsbeispiele der Erfindung in der Zeichnung näher erläutert. Es zeigen:
- FIG 1: ein Prinzipschaltbild einer ersten Ausführungsform des erfindungsgemäßen Antriebsaggregates,
- FIG 2: ein Prinzipschaltbild einer zweiten Ausführungsform des erfindungsgemäßen Antriebsaggregates.

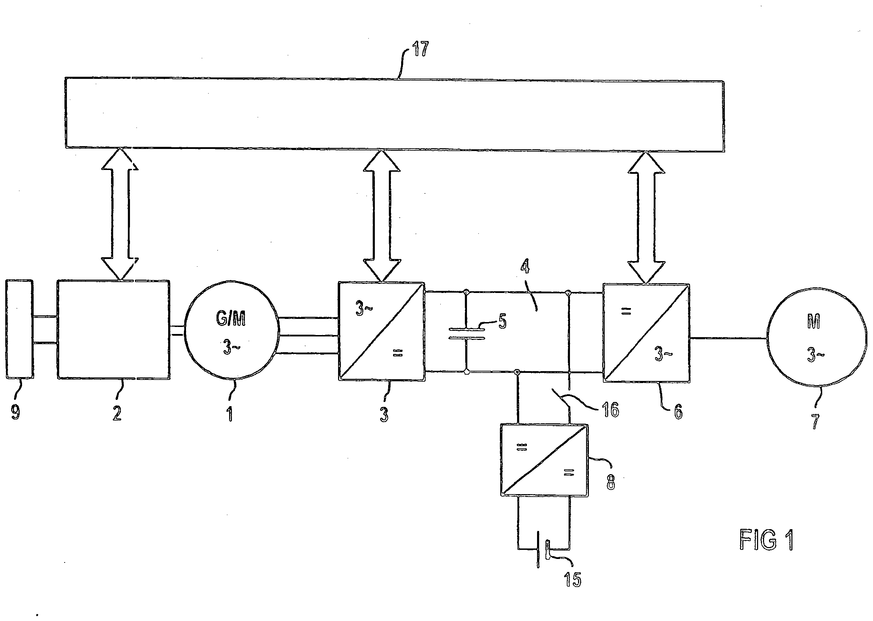

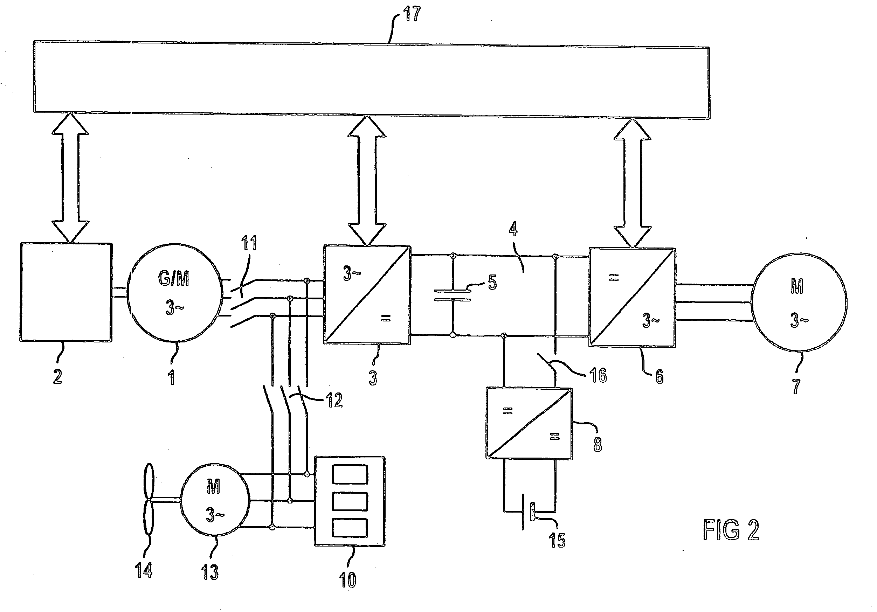

In den FIG 1 und 2 ist mit 1 eine Asynchronmaschine bezeichnet, die in den dargestellten Ausführungsbeispielen als dreiphasige Drehstrom-Asynchronmaschine ausgebildet ist. Die Asynchronmaschine 1 ist durch eine Verbrennungskraftmaschine 2, die vorzugsweise als Dieselmotor ausgeführt ist, antreibbar.

Die Asynchronmaschine 1 ist über einen Wechselrichter 3 (vorzugsweise Pulswechselrichter) mit einem Zwischenkreis 4 gekoppelt. Der Zwischenkreis 4 ist bei den in FIG 1 und 2 dargestellten Ausführungsbeispielen als Gleichspannungszwischenkreis ausgeführt und weist einen Zwischenkreiskondensator 5 auf. Im Rahmen der Erfindung kann der Zwischenkreis jedoch auch als Gleichstromzwischenkreis ausgebildet sein.

Vom Zwischenkreis 4 aus wird über einen ausgangsseitigen Wechselrichter 6 (Pulswechselrichter) ein elektrischer Fahrmotor 7 (Dreiphasen-Drehstrommotor, Drehstrom-Asynchron-Fahrmotor) gespeist.

Im Rahmen der Erfindung kann es sich bei dem elektrischen Fahrmotor auch um einen Gleichstrom-Fahrmotor handeln, der entweder direkt vom Zwischenkreis 4 oder über einen Chopper vom Zwischenkreis 4 gespeist wird.

Die in den FIG 1 und 2 dargestellten Ausführungsformen der erfindungsgemäßen Antriebsaggregate weisen weiterhin jeweils eine Einspeiseeinrichtung 8 auf, die jeweils durch Schließen eines Leistungsschalters 16 mit dem Zwischenkreis 4 koppelbar sind. Durch die Einspeiseeinrichtung 8 ist dem Zwischenkreis 4 die notwendige Energie zuführbar, mittels der der eingangsseitige Wechselrichter 3 das für den Start der Asynchronmaschine 1 notwendige Drehfeld erzeugt.

Der eingangsseitige Wechselrichter 3 ist hierbei derart steuerbar, daß die Asynchronmaschine 1 im Motorbetrieb die Verbrennungskraftmaschine 2 startet.

Bei den Antriebsaggregaten gemäß FIG 1 und 2 ist es in vorteilhafter Weise möglich, den eingangsseitigen Wechselrichter 3 bei fahrmotorseitig generatorisch erzeugter Energie derart zu steuern, daß die Asynchronmaschine 1 im Motorbetrieb die Verbrennungskraftmaschine 2 startet und anschließend in den Generatorbetrieb gesteuert wird. Die Energie, die dem Zwischenkreis 4 zugeführt wird, ist hierbei so hoch, daß der eingangsseitige Wechselrichter 3 die Asynchronmaschine 1 im Motorbetrieb betreiben kann, um die Verbrennungskraftmaschine 2 zu starten.

Beim Abbremsen eines Schienenfahrzeuges leistet die generatorische Bremse im oberen Geschwindigkeitsbereich einen wesentlichen Teil der Bremstätigkeit. Der Fahrmotor 7 wird dabei im Generatorbetrieb betrieben und erzeugt hierbei Bremsenergie. Mit dieser fahrmotorseitig generatorisch erzeugten Bremsenergie kann die Asynchronmaschine 1, die dann im Motorbetrieb arbeitet, die Verbrennungskraftmaschine 2 antreiben.

Bei der in FIG 1 gezeigten Ausführungsform des erfindungsgemäßen Antriebsaggregates kann die Asynchronmaschine 1 in den motorischen Betrieb umgesteuert werden, um dann in einem zulässigen Umfang Bremsenergie an die Verbrennungskraftmaschine 2 und/oder an eine mit der Verbrennungskraftmaschine 2 gekuppelte Scheibenbremse 9 abzugeben. Da über die Asynchronmaschine 1 angefahren werden kann, ist es möglich, die Verbrennungsmaschine 2 bei Gefällstrecken abzuschalten oder von der Asynchronmaschine 1 angetrieben, ohne Brennstoffzufuhr mitlaufen zu lassen.

Bei der Ausgestaltung des Antriebsaggregates gemäß FIG 2 ist es möglich, die vom Fahrmotor 7 generatorisch erzeugte Bremsenergie auf einen dreiphasigen Bremswiderstand 10 zu schalten. Im dargestellten Ausführungsbeispiel erfolgt dies durch einen Leistungsschalter 11.

Zusätzlich oder alternativ ist die Asynchronmaschine 1 vom eingangsseitigen Wechselrichter 3 mittels eines Leistungsschalters 12 trennbar. Die vom Fahrmotor 7 generatorisch erzeugte Bremsenergie wird bei geöffnetem Leistungsschalter 12 ausschließlich auf den dreiphasigen Bremswiderstand 10 gegeben, wohingegen bei geöffnetem Leistungsschalter 11 und geschlossenem Leistungsschalter 12 die vom Fahrmotor 7 generatorisch erzeugte Bremsenergie ausschließlich auf die Asynchronmaschine 1 gegeben wird. Durch Schließen der beiden Leistungsschalter 11 und 12 wird die vom Fahrmotor 7 generatorisch erzeugte Bremsenergie sowohl auf die Asynchronmaschine 1 als auch auf den dreiphasigen Bremswiderstand 10 gegeben.

Im dargestellten Ausführungsbeispiel ist weiterhin in Reihe zum dreiphasigen Bremswiderstand 10 ein Asynchronmotor 13 eines Lüfteraggregates zur Kühlung des dreiphasigen Bremswiderstandes 10 angeordnet. Damit ist sichergestellt, daß bei geschlossenem Leistungsschalter 11 der Bremswiderstand 10 durch den Ventilator 14 des Lüfteraggregates gekühlt wird.

Bei den in FIG 1 und 2 gezeigten Ausführungsformen des erfindungsgemäßen Antriebsaggregates wird zum Anlassen der Asynchronmaschine 1 zunächst der Zwischenkreis 4 durch Schließen des Leistungsschalters 16 mit der Einspeiseeinrichtung 8 verbunden. Der Zwischenkreis 4 wird dadurch aus einer Fahrzeugbatterie 15 aufgeladen. Nachdem dem Zwischenkreis 4 die notwendige Energie zugeführt wurde, wird der eingangsseitige Wchselrichter 3 im Motorbetrieb getaktet, um die Asynchronmaschine als Motor zum Anlassen der Verbrennungskraftmaschine 2 zu verwenden.

Im Normalbetrieb (der Startvorgang ist vollständig abgeschlossen und der Leistungschalter 16 wieder geöffnet) taktet der eingangsseitige Wechselrichter 3 die Asynchronmaschine 1 mit einer Frequenz, die niedriger ist als die Frequenz, die der Drehzahl der Verbrennungskraftmaschine 2 entspricht. Durch diese übersynchrone Drehzahl der Verbrennungskraftmaschine 2 arbeitet die Asynchronmaschine 1 im Generatorbetrieb.

Im Bremsbetrieb taktet der eingangsseitige Wechselrichter 3 die Asynchronmaschine 1 mit einer Frequenz, die höher ist als die Frequenz, die der Drehzahl der Verbrennungskraftmaschine 2 entspricht. Durch diese untersynchrone Drehzahl der Verbrennungskraftmaschine 2 arbeitet die Asynchronmaschine 1 im Motorbetrieb. Die hierbei von der Asynchronmaschine 1 erzeugte Energie kann z. B. auf die Bremsscheibe 9 (siehe FIG 1) oder auf den dreiphasigen Bremswiderstand 10 (siehe FIG 2) gegeben werden.

Die vorstehend beschriebenen Betriebsarten des Antriebsaggregates werden bei den beschriebenen Ausführungsbeispielen durch eine Steuerung 17 realisiert. Die Steuerung 17 wirkt hierbei alternativ oder gleichzeitig auf die Verbrennungskraftmaschine 2, auf den eingangsseitigen Wechselrichter 3 und/oder auf den ausgangsseitigen Wechselrichter 6. Weiterhin ist durch die Steuerung 17 die Zuschaltung der Einspeiseeinrichtung 8 sowie die Betätigung der Leistungsschalter 11 und 12 steuerbar. Es versteht sich in diesem Zusammenhang von selbst, daß hierfür anstelle einer Steuerung auch eine Regelung eingesetzt werden kann.

## Patentansprüche

1. Antriebsaggregat, das wenigstens eine Asynchronmaschine (1) und wenigstens einen elektrischen Fahrmotor (7) umfasst, wobei die Asynchronmaschine (1) durch wenigstens eine Verbrennungskraftmaschine (2) antreibbar ist und über wenigstens einen eingangsseitigen Wechselrichter (3) wenigstens einen Zwischenkreis (4) speist, der die elektrische Antriebsenergie für den elektrischen Fahrmotor (7) zur Verfügung stellt, wobei der Zwischenkreis (4) mit wenigstens einer Einspeiseeinrichtung (8) gekoppelt ist, durch die dem Zwischenkreis (4) die notwendige Energie zuführbar ist, mittels der der eingangsseitige Wechselrichter (3) das für den Start der Asynchronmaschine (1) notwendige Drehfeld erzeugt und wobei der eingangsseitige Wechselrichter (3) derart steuerbar ist, dass die Asynchronmaschine (1) im Motorbetrieb die Verbrennungskraftmaschine (2) startet, wobei das Antriebsaggregat in verschiedenen Betriebsarten steuerbar ist, wobei die Betriebsarten durch eine Steuerung (17) realisiert werden, und die Steuerung (17) hierbei auf die Verbrennungskraftmaschine (2), auf den eingangsseitigen Wechselrichter (3) und auf den ausgangsseitigen Wechselrichter (6) wirkt,
**dadurch gekennzeichnet, dass**
- in einer Betriebsart der eingangsseitige Wechselrichter (3) bei fahrmotorseitig generatorisch erzeugter Energie derart gesteuert wird, dass die Asynchronmaschine (1) im Motorbetrieb die Verbrennungskraftmaschine (2) startet und anschließend in den Generatorbetrieb gesteuert wird und dass
- in einer weiteren Betriebsart die Asynchronmaschine mit fahrmotorseitig generatorisch erzeugter Bremsenergie die Verbrennungskraftmaschine antreibt.

## Claims

1. Drive unit comprising at least one asynchronous machine (1) and at least one electric traction motor (7), where the asynchronous machine (1) can be driven by at least one internal combustion engine (2) and supplies via at least one input-side converter (3) at least one DC link (4), which provides the electrical drive energy for the electric traction motor (7), where the DC link (4) is connected to at least one supply device (8) by which the DC link (4) can be supplied with the energy required by means of which the input-side converter (3) generates the rotating field needed to start the asynchronous machine (1), and where the input-side converter (3) can be controlled in such a way that the asynchronous machine (1), operating in motor mode, starts the internal combustion engine (2), where the drive unit can be controlled in different operating modes, where the operating modes are implemented by a controller (17), and here the controller (17) acts on the internal combustion engine (2), on the input-side converter (3) and on the output-side converter (6), **characterized in that**
- in one operating mode, when the traction motor is producing energy as a generator, the input-side converter (3) is controlled in such a way that the asynchronous machine (1), operating in motor mode, starts the internal combustion engine (2) and is then switched into generator mode, and **in that**
- in a further operating mode the asynchronous machine drives the internal combustion engine using the braking energy produced by the traction motor operating as a generator.

## Revendications

1. Groupe d'entraînement qui comprend au moins une machine (1) asynchrone et au moins un moteur (7) de traction électrique, la machine (1) asynchrone pouvant être entraînée par au moins une machine (2) à combustion interne et alimentant, par au moins un onduleur (3) du côté entrée, au moins un circuit (4) intermédiaire qui met l'énergie électrique d'entraînement à disposition du moteur (7) de traction électrique, le circuit (4) intermédiaire étant couplé à au moins un dispositif (8) d'alimentation, par lequel l'énergie nécessaire peut être envoyée au circuit (4) intermédiaire, au moyen duquel l'onduleur (3) du côté entrée produit le champ tournant nécessaire au démarrage de la machine (1) asynchrone et l'onduleur (3) côté entrée pouvant être commandé de façon à ce que la machine (1) asynchrone en fonctionnement moteur fasse démarrer la machine (2) à combustion interne, dans lequel le groupe d'entraînement peut être commandé suivant différents types de fonctionnement, les types de fonctionnement étant mis en oeuvre par une commande (17), et la commande (17) agit sur la machine (2) à combustion interne, sur l'onduleur (3) du côté entrée et sur l'onduleur (6) du côté sortie,
**caractérisé en ce que**
- dans un type de fonctionnement, l'onduleur (3) côté entrée peut, pour de l'énergie produite en génératrice du côté du moteur de traction, être commandé de façon à ce que la machine (1) asynchrone en fonctionnement moteur fasse démarrer la machine (2) à combustion interne et soit commandée ensuite dans le fonctionnement en génératrice et **en ce que**
- dans un autre type de fonctionnement, la machine asynchrone entraîne la machine (2) à combustion interne avec une énergie de freinage produite en génératrice du côté du moteur de traction.
